# EUROPEAN PATENT SPECIFICATION

(11) **EP 1 603 402 B1**
(45) Date of publication and mention of the grant of the patent: **06.06.2012**
(21) Application number: 04715889.4
(22) Date of filing: 01.03.2004
(51) Int. Cl.: A23G 9/44, A23G 9/50, A23G 3/00, A23G 9/24, A23G 9/28, A23G 9/48

(54) **PACKAGED DECORATED FROZEN CONFECTION AND METHOD OF MANUFACTURE**
VERPACKTE , DEKORIERTE GEFRORENE SÜSSWAREN UND VERFAHREN ZUR HERSTELLUNG
FRIANDISE SURGELEE EMBALLEE ET DECOREE ET PROCEDE DE PRODUCTION DE LADITE FRIANDISE

(30) Priority: 10.03.2003 US 385177
(43) Date of publication of application: 14.12.2005
(73) Proprietor: Nestec S.A., 1800 Vevey (CH)
(72) Inventor: LEAS, Alain, Dublin, OH 43017 (US); MASTNY, Jonathan, David, Dublin, OH 43016 (US); KRUIK, Adrianus, Cornelis, NL-5571 Eh Bergeijk (NL); MAZUREK, Robert, John, Columbus, OH 43235 (US); GRYKIEWICZ, Shridan, Joseph, Johnstown, OH 43031 (US)
(74) Representative: Rossand, Isabelle
(86) International application number: PCT/EP2004/002046
(87) International publication number: WO 2004/080194

(56) References cited:
- EP-A- 0 516 101
- EP-A- 0 848 910
- EP-A- 0 962 151
- WO-A-00/13524
- WO-A-02/15706
- WO-A-03/013265
- DE-A- 2 249 629
- US-B1- 6 251 456
- PATENT ABSTRACTS OF JAPAN vol. 014, no. 299 (C-0733), 27 June 1990 (1990-06-27) -& JP 02 097357 A (TOPPAN PRINTING CO LTD), 9 April 1990 (1990-04-09)
- PATENT ABSTRACTS OF JAPAN vol. 017, no. 093 (C-1029), 24 February 1993 (1993-02-24) -& JP 04 287639 A (AKUTAGAWA SEIKA KK), 13 October 1992 (1992-10-13)

## Description

### Field of the Invention

The present invention is related a method for creating a decorative pattern on the surface of a frozen confection.

### Background of the Invention

There is an increasing consumer demand for frozen confections that include cones having decorative and appealing aspects to them.

In the art of frozen confection manufacture, efforts have been made to prepare ice cream cones with decorative toppings created by extruding a topping from a star-shaped nozzle to simulate a flower, e.g., a rose, in some cases under rotation to obtain decorative aspects on the tops of the cones. Further decorations can be created, e.g., by pouring ingredients such as chocolate chips or granulates of dried fruit, nuts or sweets onto the ice cream topping.

PCT publication WO 02/15706 discloses a frozen confectionery cone composed of a chocolate conical shell as a receptacle for an ice cream core formed into a protective package sleeve which is decorated at its top and closed with a lid which can be transparent,

While this is a useful product, there still is a need for additional frozen confection cones having novel appearances for increasing consumer appeal for such products. The present invention now satisfies this need.

### Summary of the Invention

The present invention is an improvement over known products by the creation of an attractive decorative pattern onto the sidewall outer surface of a cone shaped shell. The pattern is visible on the shell and may be in the form of an image, a message or other visual appearance that is different from that of the shell. This pattern is not only visible on the cone but the cone can be placed in a plastic shell so that it will be visible in the packaged product as well.

The invention, provides a method for producing a packaged decorated from confection product which comprises:
forming a packaging sheet into a cone sleeve,
dispensing strings of a first semi-solid confection material from a dispensing head with a plurality of holes into the thus formed packaging sheet at random and so producing a mesh of strings on the inside of the sleeve,
lightly pressing the mesh of strings against the sleeve into a mesh cone within the sleeve,
adding a second confection material of a contrasting color different to that of the strings into the sleeve containing the mesh cone and
forming a cone with contrasted mesh lines of the first confection material embedded into a cone wall of the second confection material and
providing a frozen confection at least in the interior volume of the shell to form the product, with the sleeve forming part of the packaging

The decorative pattern preferably includes lines, a writhing, a logo or a symbol Also, the fat-based composition comprises chocolate and the frozen confection comprises ice cream or a sorbet with the pattern being a fat that has a color that contrasts with that of the fat-based composition of the shell.

### Brief Description of the Drawing Figures

In the accompanying drawings,
Fig. 1 illustrates a packaged decorated composite frozen confection product according to the invention;
Fig. 2 to 4 illustrate various products that are obtained by carrying out the methods of the invention;
Fig. 5 illustrates a packaging sleeve that contains a decorative pattern thereon for transfer to a cone shell according to the invention;
Fig. 6 illustrates a further aspect of the method of the invention and
Fig. 7 illustrates an alternative embodiment of forming a sleeve that contains a decorative pattern thereon for transfer to a cone shell according to the invention.

### Detailed Description of the Preferred Embodiments

In the context of this specification the shell can be of any size or shape that defines a volume therein that can contain all or a portion of a frozen confection therein. Often, the frozen confection will extend above the top of the shell so that the frozen confection can be consumed before the shell. The shell can be shaped as a cylinder, polygon, or other desired shape. These shapes can have a uniform circumference or can have portions of different circumferences. The most preferred shape is that of a true or truncated cone. Thus, in this invention, the expression "an open-ended shell in a cone shape" means a shell in the form of a cone or of a truncated elongated cone.

A fat-based composition for the shell advantageously comprises a confectionery fat. Under confectionery fat it is understood in the context of this specification a confectionery coating including a chocolate coating or a "compound" coating comprising a vegetable fat or fraction, possibly hydrogenated or a mixture of such fats and fractions. Such a solid composition may contain sugar or milk solids as in the case of chocolate. The chocolate may be dark, milk or white chocolate. The solid composition forming the shell may be homogeneous and composed of flavored and colored chocolate. It may be aerated. It may further contain any kind of inclusions such as nuts, fruits, chocolate pieces or the like.

A precise decorative patterned design in this invention means lines, writing, logo or symbol that can be applied in any manner but preferably are applied by printing or spraying. The latter are preferred for obtaining the preciseness of the appearance of the pattern.

The frozen confection constituting the filling or center of the shell volume may be ice cream or sorbet, preferably aerated and of similar texture to that of an ice cream. Inclusions such as nuts, chocolate chips, sugar confectionery particles, preserved fruit, mint chips, biscuit crumbles etc. may be applied before, e.g., into the apex of the cone-like shaped shell, in admixture with the frozen confection or on top of the frozen confection.

For manufacturing the product, a printed sheet is used which is made of food grade flexible, clear plastic foil with a smooth surface, preferably of low density polyethylene, polyethylene terephtalate or other known materials of similar properties.

A pattern is applied on one face of the sheet For less defined shapes of the pattern, the a fat-based material can be dripped or poured onto the sheet. More accurate pattern definition can be obtained by printing using traditional printing processes with a fat based ink. The ink is made of hard fat with a melting point higher than the ambient temperature, preferably based on cocoa butter or any hardened vegetable fat containing a food colorant. The ingredients used to color the fat can be artificial colors, colored powders, e.g. cocoa powder, dyes, provides they are fat soluble or fat dispersible.

In a preferred embodiment, the fat-based material is made of a color that contrasts with that of the fat-based material that is used to make the shell. In another preferred embodiment, the fat-based ink has a higher melting temperature than that of the fat-based material that is used to make the shell. This also contributes to better definition of the lines or outline of the pattern.

The sleeve is formed by hand or preferably using existing winding equipment adapted for plastic material, which is conventionally used to form sleeves from sheets of paper and aluminum, e.g. a laminate or aluminized paper.

The transfer of the pattern from the sleeve to the outside of the fat based cone-like shaped shell is done by pressure since the fat has a preferential affinity to the fat based shell compared to the plastic or the paper/aluminum sheet of the sleeve.

In the context of this specification, the packaging in the packaged frozen confection of the invention is unusual in that a transparent section is incorporated to display the decorative pattern. The transparent section may be a window, a band, the entire lower portion of the sleeve or even the entire sleeve.

For carrying out the second method, it is possible to create a decorative pattern of fat-based material in the sleeve after it has been formed into a cone by using a method comprising laying strips in the sleeve serving as a mold, preferably in a random manner on the internal surface of the sleeve by means of one or more nozzles with a diameter of the opening of the nozzles preferably of from 0.5 to 2 mm through which the coating material flows.

Design patterns are preferably formed on a plastic sheet by using cocoa butter colored with cocoa and other fat soluble food-grade colorings. A commercially available patterned sheet may be purchased form PCB Creations of Paris, France. The sheet is then formed into a desired shape, preferably as noted above, into a plastic cone using conventional winding equipment which has been adjusted to account for the different coefficient of friction for plastic materials in comparison to that of a conventional paper/aluminum sheet. The patterns are then placed or positioned on the interior of the plastic cone. The cones are then stacked and transported to a filling machine.

During the filling operation, the plastic cone is deposited into a cooled female die formed in the shape of a cone. Warm chocolate with a temperature above the melting temperature of the fat material of the pattern is deposited into the plastic cone, up to about the half of the height of it. A cooled male die is inserted into the plastic cone so as to displace the chocolate and allow it to harden into the shape of an empty chocolate shell in the form of a cone.

The male die may be driven by an air cylinder in which the air pressure is between 50 Psi (3.45 bar) and 150 Psi (10.3 bar). The male die is held in position inside the plastic cone for a time sufficient for the chocolate to harden into shape. This holding time is a function of the temperatures of the male and female dies and is also determined by the hardening behavior of the chocolate. Holding times can range from 0.1 to about 5 s.

The warm chocolate melts the printed fat pattern and allows it to be transferred from the plastic cone to the surface of the chocolate while retaining the precise pattern. As the cone is subsequently shaped and hardened, the chocolate, along with the surface pattern becomes fixed. The outer surface of the shell is retained in a smooth and preferably shiny condition.

The decorative chocolate cone is then filled or even is overfilled with ice cream and a decorative topping is placed on the top. As noted above, it is a common manufacturing technique for frozen confections to provide a portion that extends above the top of the shell so that the consumer can initially eat the ice confection prior to eating the shell.

The product is then packaged. In the situation where the plastic sleeve is configured to be longer that the height of the cone and top ice confection portion, the package may simply be completed by the addition of a lid, which may be transparent. If desired, printed material, stickers or other packaging adornments may be added to the plastic sleeve r lid. As the decorative pattern is intended to be viewed through the plastic sleeve, such additional adornments are often not necessary. When the packaging sleeve is only partly transparent, the remaining portions of the sleeve may be provided with advertising, the product name, colors or other packaging adornments.

### Examples

In the following examples, the method described above was used to prepare decorated ice cream cone products according to the invention.

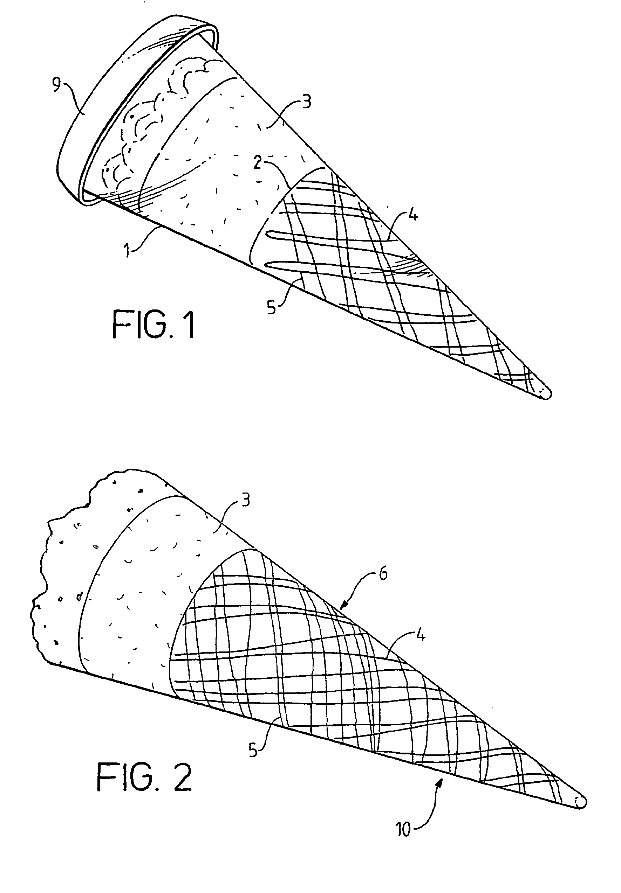

In Fig.1, the transparent sleeve 1 contains a chocolate shell 2 and ice cream filling 3. The chocolate shell has fine printed chocolate stripes red and white, 4 and 5 respectively, which are criss-crossed and which are visible by contrast on the dark chocolate shell of the ice cream cone through the transparent sheet Fig. 1 also illustrates a lid 9 for the packaging.

When unpacked, the frozen confection and cone product 10 as shown in Fig. 2 contains the decoration with the precise decorative patterns 4, 5 transferred to the exterior surface of the chocolate shell of the cone. It is apparent that the decorative pattern was very precise and that the surface 6 of the chocolate cone was smooth and shiny.

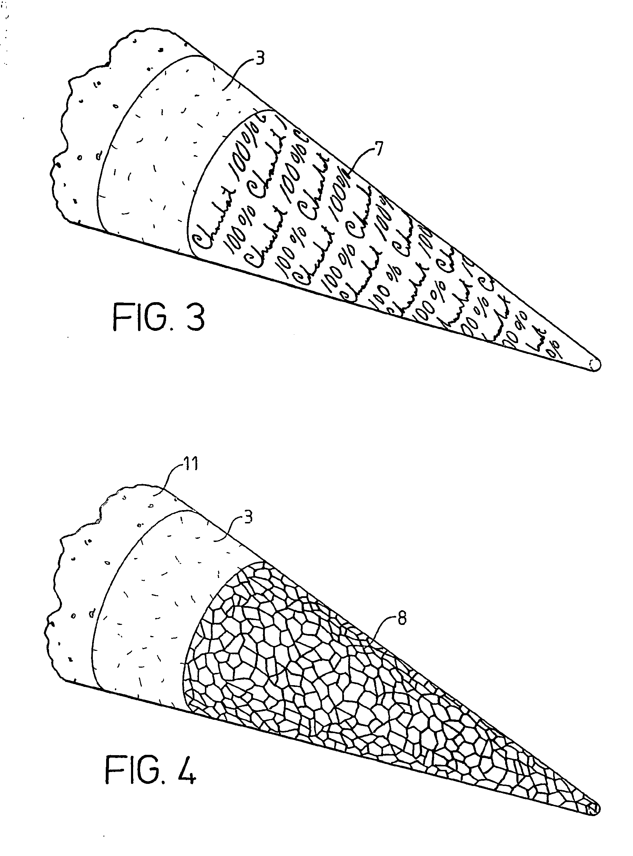

In Fig. 3 the same method was used and an unpacked ice cream cone was obtained with repetitive script 7 printed in white chocolate contrasting with the dark chocolate shell. The surface of the decorated chocolate shell had a smooth and shiny surface.

Fig. 4 shows an alternative embodiment of a fine decorative pattern of complicated decorative design 8 appearing in light brown color of milk chocolate contrasting with the white chocolate shell, also with a smooth and shiny surface of the decorated chocolate shell of the unpacked product A topping of frozen whipped cream 11 is also illustrated.

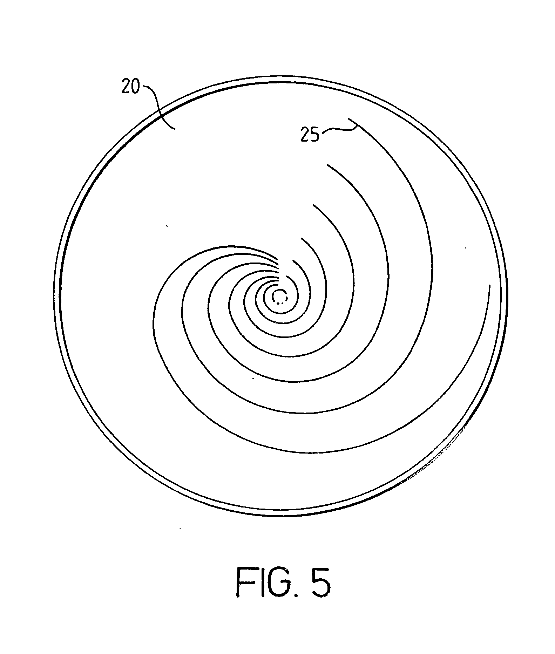

Fig. 5 illustrates a paper sleeve 20 that is formed into a cone. On the inner surface of the sleeve is provided a pattern 25 of lines which later are transferred to the chocolate shell.

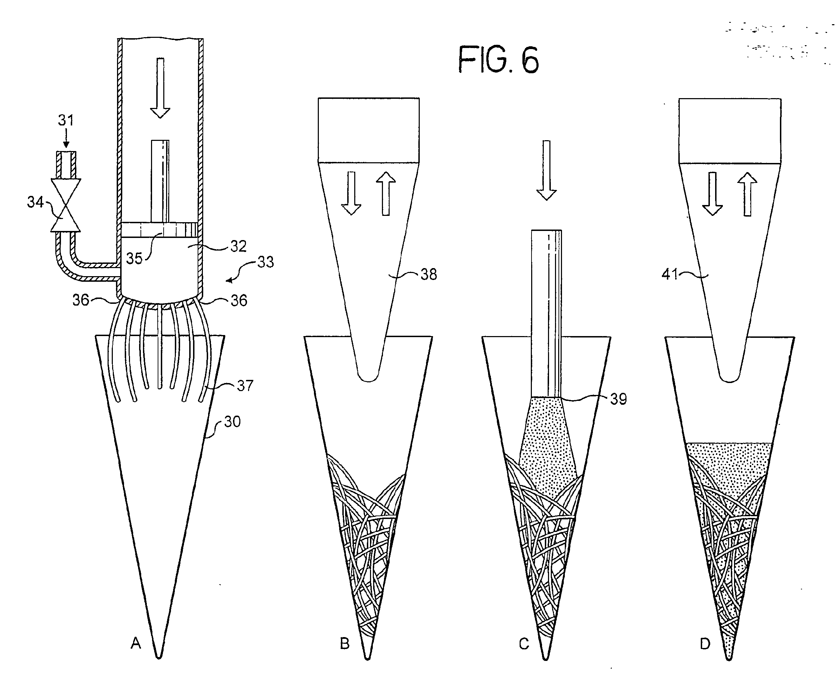

Fig. 6 shows an alternative embodiment of a method of the invention in which in step A, a confection material with quick set-up properties, a white chocolate coating 31, enters chamber 32 of a dispensing head 33 through the open valve 34. Valve 34 then closes. Piston 35 presses the confection material 31 through holes 36 thus making confection spaghetti-like strings 37 which are dispensed at random in a quantity equal to half the weight of a plain chocolate cone into the empty sleeve 30.

In step B, a male die 38, which is cooled, descends into the sleeve 30 and lightly presses the confection spaghetti-like strings into a mesh cone and then withdraws from the sleeve 30.

In step C, a different confection material with contrasting colour, dark chocolate 39 is added to the sleeve 30 containing the mesh cone.

In step D, a final pressing is performed by descending, pressing and then removing a second cooled male die 41. The result is a decorated chocolate cone with contrasting white lines embedded in a dark chocolate cone of contrasting colour.

The method adds a random look to the products obtained while maintaining a visual relationship to all the other random cones produced. The surface of the outer wall is smooth, i.e. at the interstices between the lines, but is not necessarily entirely smooth at the embedded thick lines.

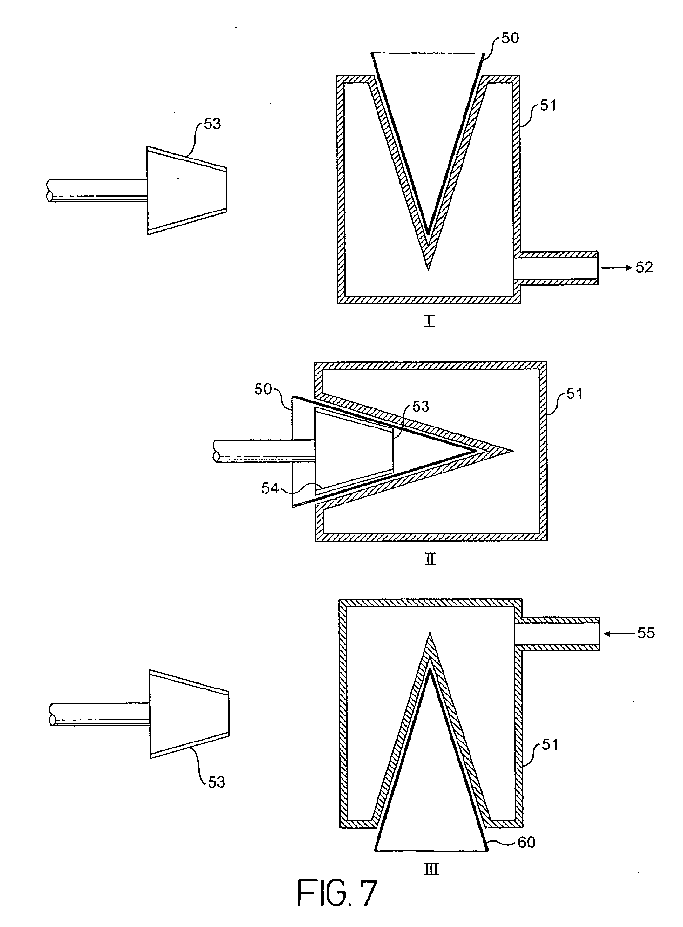

Fig. 7 schematically illustrates an alternative method of introducing a pattern into a formed sleeve;

In step I, a female cone sleeve holder 51 in vertical position receives a sleeve 50 from a feeder (non represented) and then holds it securely using a vacuum at 52. A printing head 53 is in retracted position.

In step II, the sleeve holder 51 shifts to a horizontal position to permit the entry of a conical printing head 53 into the sleeve 50. The printing head 53 consists of a truncated conical metal support surrounded by an engraved sheet of rubber 54 (or any suitable resilient material). The rubber sheet comprises the pattern to be transferred to the sleeve 50 and has been previously inked with a lipid-based food grade ink (preferably chocolate-based) and thus constitutes a rubber stamp. The support is then pressurized, e.g. with compressed air, pushing the rubber stamp against the inner wall of the sleeve and transferring the pattern to the sleeve inner surface.

In step III, the printing head 53 is retracted from the female sleeve holder 51 and it is re-inked with the lipid-based ink system. The female sleeve holder 51 then pivots to a discharge position, and it is pressurized to eject the printed sleeve for transport to the chocolate cone forming system. It is also possible to transfer the pattern to the sleeve by rotating the male printing head while moving its axis of rotation in a circular manner. Thus the invention allows the production of formed chocolate cones, cups and other shapes with unique decorations, that can be used to contain fillings such as ice cream but also other confectionery masses. Thus the invention permits the application of decoration to the inside of a wrapper, which can then subsequently be used as a mould for a chocolate shape.

Of course, the skilled artisan can readily select different colors of the pattern so that an appropriate visual contrast is obtained with that of the shell. Similarly, the technology available today would enable the artisan to apply a wide variety of different pattern configurations ranging from those having relatively thick lines to those that are relatively thin. The particular patterns, line thicknesses, and contrasting colors can vary greatly, and all combinations are deemed to be within the scope of this invention.

## Claims

1. A method for producing a packaged decorated composite frozen confection product which comprises:
forming a packaging sheet into a cone sleeve,
dispensing strings of a first semi-solid confection material from a dispensing head with a plurality of holes into the thus formed packaging sheet at random and so producing a mesh of strings on the inside of the sleeve,
lightly pressing the mesh of strings against the sleeve into a mesh cone within the sleeve,
adding a second confection material of a contrasting color different to that of the strings into the sleeve containing the mesh cone,
forming a cone with contrasted mesh lines of the first confection material embedded into a cone wall of the second confection material and
providing a frozen confection at least in the interior volume of the shell to form the product, with the sleeve forming part of the packaging.

2. The method according to claim 1, wherein the packaging sleeve is provided with a transparent section so as to show the pattern.

3. The method according to claim 1, wherein the entire packaging sleeve is transparent to fully show the pattern through the packaging.

4. The method according to claim 1, wherein the decorative pattern includes lines, a writing, a logo or a symbol.

5. The method according to claim 1, wherein the fat-based composition comprises chocolate.

6. The method according to claim 1, wherein the frozen convection comprises ice cream or a sorbet.

## Patentansprüche

1. Verfahren zur Herstellung eines verpackten dekorierten zusammengesetzten gefrorenen Süßwarenprodukts, bei dem:
ein Verpackungsbogen zu einer Konushülse geformt wird,
Stränge eines ersten halbfesten Süßwarenmaterials willkürlich aus einem Dispensierkopf mit einer Vielzahl von Löchern in den derart geformten Verpackungsbogen abgegeben werden und so auf der Innenseite des Bogens ein Gitter aus Strängen geformt wird,
das Gitter aus Strängen leicht gegen die Hülse zu einem Gitterkonus innerhalb der Hülse gepresst wird,
ein zweites Süßwarenmaterial in einer von derjenigen der Stränge verschiedenen Kontrastfarbe in die Hülse gegeben wird, die den Gitterkonus enthält,
ein Konus mit kontrastierenden Gitterlinien aus dem ersten Süßwarenmaterial,
das in eine Konuswand des zweiten Süßwarenmaterials eingebettet ist, gebildet wird, und
eine gefrorene Süßware zumindest im Innenvolumen der Hülse bereitgestellt wird, um das Produkt zu bilden, wobei die Hülse einen Teil der Verpackung bildet.

2. Verfahren nach Anspruch 1, wobei die Verpackungshülse mit einem transparenten Bereich bereitgestellt wird, um das Muster zu zeigen.

3. Verfahren nach Anspruch 1, wobei die gesamte Verpackungshülse transparent ist, um das Muster durch die Verpackung komplett zu zeigen.

4. Verfahren nach Anspruch 1, wobei das dekorative Muster Linien, eine Schrift, ein Logo oder ein Symbol umfasst.

5. Verfahren nach Anspruch 1, wobei die fettbasierte Zusammensetzung Schokolade enthält.

6. Verfahren nach Anspruch 1, wobei die gefrorene Süßware Eiscreme oder ein Sorbet umfasst.

## Revendications

1. Procédé pour la production d'un produit de confiserie congelé composite décoré et emballé, qui comprend les étapes suivantes :
former une feuille d'emballage en un manche en cône,
distribuer au hasard des fils d'une première matière de confiserie demi-solide depuis une tête de distribution avec une pluralité de trous à l'intérieur de la feuille d'emballage ainsi formée, et produire ainsi un maillage de fils à l'intérieur du manchon,
presser légèrement le maillage de fils contre le manchon en un cône de maillage à l'intérieur du manchon,
ajouter une deuxième matière de confiserie ayant une couleur contrastante qui est différente de celle des fils à l'intérieur du manchon contenant le cône de maillage,
former un cône avec des lignes de maillage contrastées formées par la première matière de confiserie enrobées à l'intérieur d'une paroi d'un cône constitué par la deuxième matière de confiserie et
fournir une confiserie congelée au moins dans un volume intérieur de l'enveloppe pour former le produit, avec la partie formant manchon de l'emballage.

2. Le procédé selon la revendication 1, dans lequel le manchon d'emballage est doté d'une section transparente de manière à montrer le motif.

3. Le procédé selon la revendication 1, dans lequel tout le manchon d'emballage est transparent de manière à montrer complètement le motif à travers l'emballage.

4. Le procédé selon la revendication 1, dans lequel le motif décoratif inclut des lignes, un texte écrit, un logo ou un symbole.

5. Le procédé selon la revendication 1, dans lequel la composition à base de matière grasse comprend du chocolat.

6. Le procédé selon la revendication 1, dans lequel la confiserie congelée comprend de la crème glacée ou un sorbet.
